Europäisches Patentamt

European Patent Office

Office européen des brevets

(19)

(11) **EP 1 395 075 A1**

## (12) EUROPEAN PATENT APPLICATION
published in accordance with Art. 158(3) EPC

(43) Date of publication:
03.03.2004 Bulletin 2004/10

(51) Int Cl.7: **H04Q 7/38**

(21) Application number: **02733302.0**

(86) International application number:
**PCT/JP2002/005524**

(22) Date of filing: **05.06.2002**

(87) International publication number:
**WO 2002/102109 (19.12.2002 Gazette 2002/51)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.06.2001 JP 2001170822**

(71) Applicant: **MATSUSHITA ELECTRIC INDUSTRIAL CO., LTD.**
**Kadoma-shi, Osaka 571-8501 (JP)**

(72) Inventor: **MIYA, Kazuyuki**
**Asao-ku, Kawasaki-shi, Kanagawa 215-0021 (JP)**

(74) Representative: **Grünecker, Kinkeldey,**
**Stockmair & Schwanhäusser Anwaltssozietät**
**Maximilianstrasse 58**
**80538 München (DE)**

## (54) CELLULAR RADIO TRANSMISSION APPARATUS AND CELLULAR RADIO TRANSMISSION METHOD

(57) Signals from distributed radio sections (102-1-102-N) are sent to a demodulator (1031) of BTS (103). In the demodulator (1031), maximum ratio combining is performed with respect to each signal after radio reception processing. That is to say, since, in conventional DHO, demodulation processing is performed individually in,each BTS and demodulated data after the demodulation processing is sent to RNC, where selection diversity is performed with the demodulated data, maximum ratio combining cannot be performed during the demodulation processing in BTS. However, the present invention is configured such that a single BTS processes signals received in distributed antennas, so that the demodulator (1031) can perform maximum ratio combining with respect to every signal after radio reception processing, thereby improving the reliability of the demodulated data.

FIG. 3

EP 1 395 075 A1

## Description

Technical Field

The present invention relates to cellular wireless transmission apparatus and cellular wireless transmission methods for use with digital wireless communication schemes.

Background Art

In cellular systems, generally, the area covered by one base station (BTS) is divided into a plurality of sectors each provided with a transmission/reception antenna. Between neighboring sectors under the same BTS, inter-sector HO (handover) is performed. Moreover, between neighboring BTS's, inter-cell HO is performed. In a CDMA (Code Division Multiple Access) system, generally, inter-BTS HO adopts DHO (Diversity HO: also referred to as soft HO), while the intra-BTS HO adopts SHO (also referred to as softer HO).

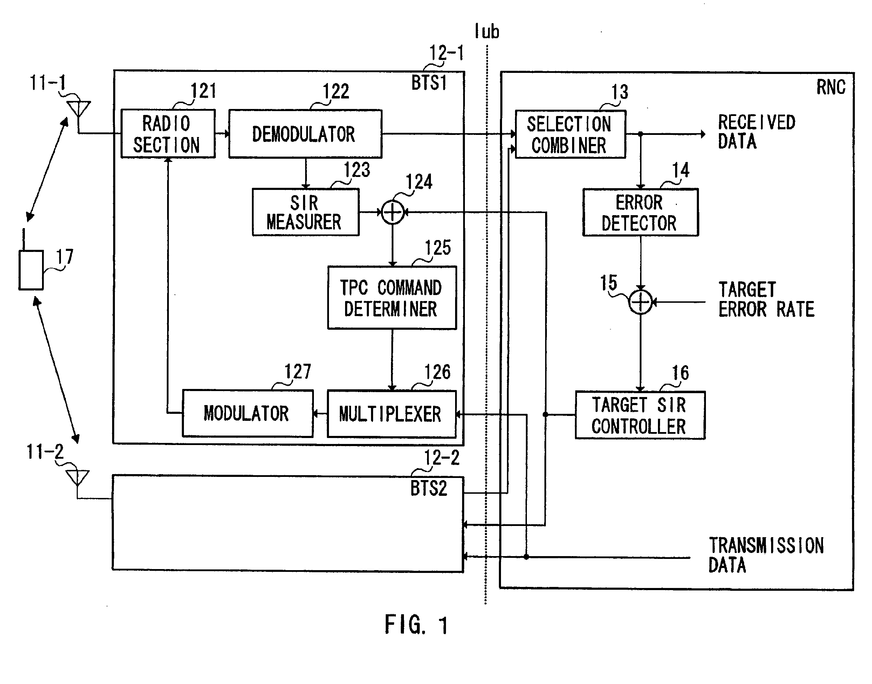

FIG.1 is a block diagram showing a configuration of a conventional CDMA cellular wireless transmission apparatus that performs DHO in quality of inter-BTS HO. Incidentally, although FIG.1 is illustrated such that the number of channels is one for the purpose of simplifying the explanation, the basic configuration would remain the same with a greater number of channels.

In BTS 1 (12-1), radio section 121 receives an uplink signal transmitted from mobile station (MS) 17 through antenna 11-1. Radio section 121 performs predetermined radio reception processing of the uplink signal (i.e., down-conversion and A/D conversion), and outputs the signal after the radio reception processing to demodulator 122. Demodulator 122 performs demodulation processing of the radio signal after the radio reception processing and obtains demodulated data. Incidentally, demodulator 122 performs processing such as path search, despreading processing, synchronization detection, RAKE combining, channel codec, and so on.

This demodulated data is output to SIR (Signal to Interference Ratio) measurer 123, where SIR measurement is performed using a known signal such as the pilot portion (PL) of the data. In addition, the demodulated data is output to selection combiner 13 of RNC (Radio Network Controller).

The SIR level measured in SIR measurer 123 is output to adder 124. Moreover, a target SIR level for the inner loop is output from RNC into adder 124, where a calculation is performed as to whether the measured SIR level is high or low compared to the target SIR level. The information of the difference (i.e., whether the measured SIR level is higher or lower than the target SIR level) is output to TPC command determiner 125.

TPC command determiner 125 decides whether to increase (UP) or decrease (DOWN) the transmission power according to this difference information, generates an uplink TPC command to that effect (later used as a transmission power control signal according to need), and outputs the TPC command to multiplexer 126. Multiplexer126 multiplexes the transmission data sent from RNC with the TPC command, and outputs the multiplex signal to modulator 127. Modulator 127 performs digital modulation processing with the multiplex signal, and outputs the modulated signal to radio section 121. Incidentally, modulator 121 performs channel codec, digital modulation processing, despreading modulation processing, and so on.

Radio section 121 performs predetermined radio transmission processing of the modulated signal (i. e., D/A conversion and up-conversion). This signal after the radio transmission processing is transmitted as a downlink signal through antenna 11-1 to mobile station 17, which is the communication partner.

On the RNC (control station) side, selection combiner 13, having received the demodulated data from BTS' s 12-1 and 12-2, selects modulated data of good quality from the received demodulated data, and transmits this as received data, thereby maintaining the quality of communication. This received data is also output to error detector 14, where the error rate of this received data is obtained. The obtained error rate is output to adder 15.

A target error rate is output to adder 15, where a decision is made as to whether the obtained error rate is high or low compared to the target error rate. The result of this decision is output to target SIR controller 16, which then controls the target SIR in accordance with the result of the decision (i.e., the outer-loop) . This target SIR is output to adder 124 in each of BTS's 12-1 and 12-2.

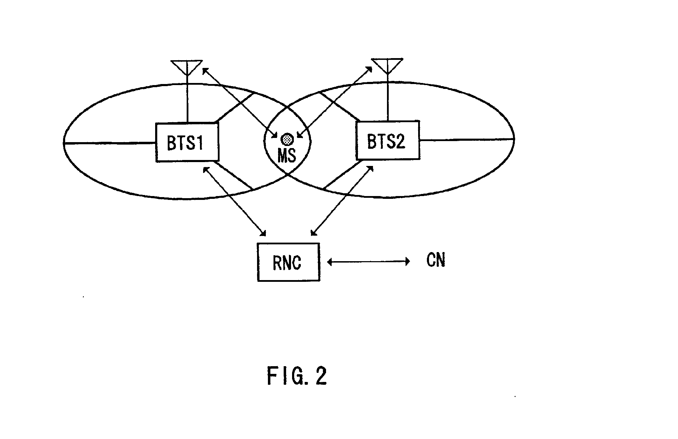

The above operations in BTS 1 (12-1) take place in BTS 2 (12-2) in the same way. Therefore, in DHO, as illustrated in FIG.2, transmission power control is performed separately between BTS 1 and MS and between BTS 2 and MS, and in RNC, selection diversity is performed as comparison is made between the quality of demodulated data from BTS 1 and the quality of demodulated data from BTS 2.

When a cellular wireless transmission apparatus having the above configuration performs DHO, BTS's 12-1 and 12-2 each separately generate and transmit uplink TPC commands. MS 17 increases the transmission power only when BTS's 12-1 and 12-2 both command on "UP." On the moment level, control such as this maintains the required received level (i.e., SIR) with respect to at least one of the BTS's, and minimizes the transmission level so as not to cause interference. Moreover, combining this type of control with the selection diversity in RNC makes it possible to maintain the quality of communication and maximize system capacity.

Nevertheless, since in DHO each BTS individually performs modulation processing and SIR measurement of received signals and the generation of uplink TPC commands. So if the number of BTS's in the DHO state (i.e., the number of concurrent communications) grows, an equally large number of processing circuits per user (channel) will be necessary.

Disclosure of the Invention

It is therefore one of the principal objects of the present invention to provide a cellular wireless transmission apparatus and a cellular wireless transmission method that can maintain the quality of communication and maximize system capacity, and that can furthermore downscale the size of the processing circuit.

The present inventor defines the area covered by one BTS that manages a plurality of cells as a "cluster." The present inventor has then contemplated the feasibility of the configuration in which one BTS processes one cluster and has found out that performing SHO for intra-cluster HO would solve various problems in HO processing, and has thus arrived at the present invention. Incidentally, assuming that a cluster is a large cell, the configuration of the present invention in which one BTS processes one cluster is the same as the configuration in which a plurality of small, distant clusters are distributed.

In other words, the essence of the present invention is that, in a cellular wireless transmission apparatus that manages a cluster, which is a plurality of cells each consisting of a plurality of sectors, softer handover, which is handover within a single wireless transmission apparatus, is applied to handover between a plurality of cells in a cluster, and diversity handover is applied to handover between clusters, thereby maintaining the quality of communication, maximizing system capacity, and furthermore reducing the size of the processing circuit.

According to one embodiment of the present invention, a cellular wireless transmission apparatus that manages a cluster composed of a plurality of cells each consisting of a plurality sectors, comprises: an antenna distributed in the sectors; a demodulator that, upon a handover, performs a maximum ratio combining of a signal received from the sectors involved in the handover and obtains demodulated data; a transmission power control signal generator that generates an uplink transmission power control signal in accordance with a received quality of the received signal after the maximum ratio combining or a received quality of the demodulated data (e.g. received SIR); and a transmitter that transmits transmission data and the same uplink transmission power control signal to all the sectors involved in the handover.

According to another embodiment of the present invention, a cellular wireless transmission apparatus that manages a cluster composed of a plurality of cells each consisting of a plurality sectors, comprises: an antenna distributed in the sectors; a demodulator that, upon a handover, performs a maximum ratio combining of a received signal from the sectors involved in the handover and obtains a downlink TPC command (transmission power control signal); and a transmitter that performs a downlink transmission power control for all the sectors involved in the handover in accordance with the downlink transmission power control signal common to all the sectors involved in the handover.

Brief Description of Drawings

FIG.1 is a block diagram showing a configuration of a conventional cellular wireless transmission apparatus;
FIG.2 illustrates a conventional cellular wireless transmission method;
FIG.3 is a block diagram showing a configuration of the cellular wireless transmission apparatus of Embodiment 1 of the present invention;
FIG.4A illustrates the difference between the cellular wireless transmission method of Embodiment 1 and a conventional cellular wireless transmission method;
FIG.4B illustrates the difference between the cellular wireless transmission method of Embodiment 1 and a conventional cellular wireless transmission method;
FIG.5 illustrates the cellular wireless transmission method of Embodiment 1;
FIG.6 illustrates the advantage of the cellular wireless transmission apparatus of Embodiment 1;
FIG.7 is a block diagram showing a configuration of the cellular wireless transmission apparatus of Embodiment 2 of the present invention;
FIG.8 is a block diagram showing a configuration of the cellular wireless transmission apparatus of Embodiment 3 of the present invention;
FIG.9 is a block diagram showing a configuration of a conventional cellular wireless transmission apparatus;
FIG.10 is a block diagram showing a configuration of the cellular wireless transmission apparatus of Embodiment 4 of the present invention; and
FIG.11 is a block diagram showing a configuration of a conventional cellular wireless transmission apparatus.

Best Mode for Carrying Out the Invention

With reference to the accompanying drawings now, embodiments of the present invention will be described below.

(Embodiment 1)

A case will be explained here with the present embodiment where a configuration is employed in which the area (referred to as "cluster" in the present specification) covered by one BTS managing a plurality of cells is processed by one BTS so as to change inter-cell handover to SHO, not DHO, to reduce the number of times DHO is performed in a given area (i.e. DHO rate). Incidentally, the configurations of the present invention can be construed such that a cluster is a large cell in which a large number of sectors are distributed for multi-sectorization.

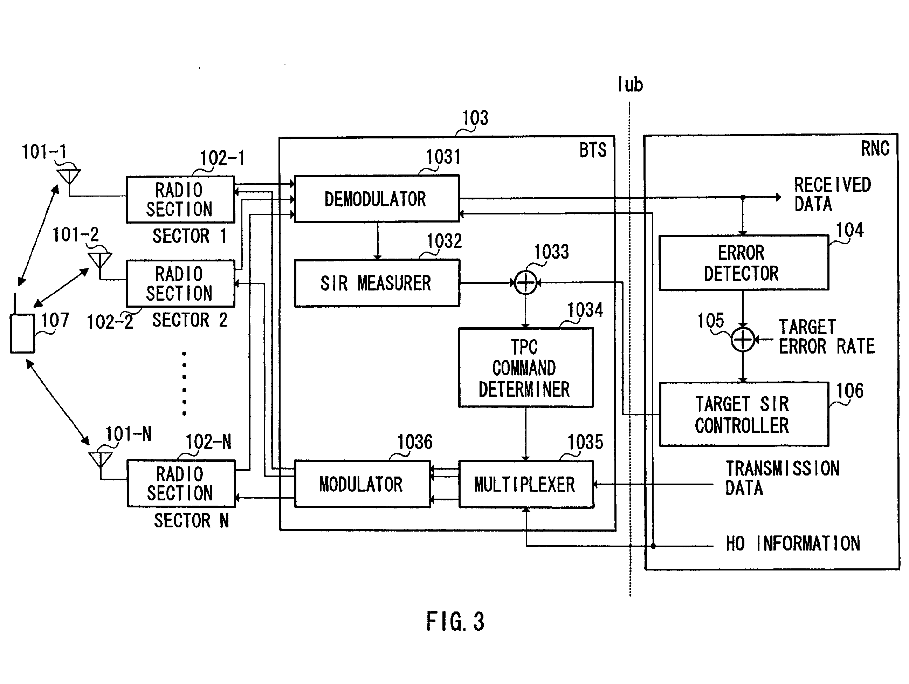

FIG.3 is a block diagram showing a configuration of the cellular wireless transmission apparatus of Embodiment 1 of the present invention.

An uplink signal transmitted from mobile station (MS) 107 is received in respective radio sections 102-1 - 102-N through antennas 101-1 - 101-N distributed in the sectors. Radio sections 102-1 - 102-N perform predetermined radio reception processing (e.g. down-conversion and A/D conversion) with the uplink signal, and output the signal after the radio reception processing to demodulator 1031 of BTS 103. Demodulator 1031 performs demodulation processing of the radio signal after the radio reception processing, and obtains demodulated data. Incidentally, demodulator 1031 performs processing such as path search, in which a received path is selected from a plurality of sectors based on HO information and the level of each sector, despreading processing, synchronization detection, RAKE combining, channel codec, separation, and so on.

This demodulated data is output to SIR (Signal to Interference Ratio) measurer 1032 of BTS 103, where SIR measurement is performed using a known signal such as the pilot portion (PL) of the data. In addition, the demodulated data is output as received data to error detector 104 of RNC (Radio Network Controller).

The SIR level measured in SIRmeasurer 1032 is output to adder 1033. Moreover, a target SIR level for the inner loop is output from RNC into adder 1033, where a calculation is performed as to whether the measured SIR level is high or low compared to the target SIR level. The information of the difference (i.e., whether the measured SIR level is higher or lower than the target SIR level) is output to TPC command determiner 1034.

TPC command determiner 1034 decides whether to increase (UP) or decrease (DOWN) the transmission power according to this difference information, generates an uplink TPC command to that effect (later used as a transmission power control signal according to need), and outputs the TPC command to multiplexer 1035. With reference to the HO information, only with the sectors in the HO state, does multiplexer 1035 multiplex the transmission data transmitted from the RNC with the uplink TPC command, and transmit the multiplex signal to modulator 1036. Modulator 1036 performs digital modulation processing with the multiplex signal, and outputs the modulated signal to distributed radio sections 102-1 - 102-N. Those sectors not in the HO state perform no transmission. Incidentally, modulator 1036 performs channel codec, digital modulation processing, despreading modulation processing, and so on. As for the position of multiplexer 1035 on the transmitting side, it is subject to variation depending on the order of frame formation (i.e. multiplexing) and channel codec, and is not limited to the one shown in FIG.3.

Radio sections 102-1 - 102-N perform predetermined radio transmission processing of the modulated signal (e.g. D/A conversion and up-conversion). This signal after the radio transmission processing is transmitted as a downlink signal through antenna 101-1 - 101-N to mobile station 107, which is the communication partner.

On the RNC (control station) side, the demodulated data from BTS 103 is output to error detector 104. Error detector 104 obtains the error rate of the demodulated data and outputs it to adder 105.

A target error rate is output to adder 105, where a decision is made as to whether the obtained error rate is high or low compared to the target error rate. The result of this decision is output to target SIR controller 106. Target SIR controller 106 controls the target SIR in accordance with the result of the decision (i.e. the outer-loop). This target SIR is output to adder 1033 of each BTS 103. Incidentally, "Iub" in the figure indicates an interface.

Now a case will be explained here where a cellular wireless transmission apparatus having the above configuration performs HO.

First, through antennas 101-1 - 101-N distributed in respective sectors, an uplink signal from MS 107 is received in radio sections 102-1 - 102-N with which antennas 101-1 - 101-N are equipped.

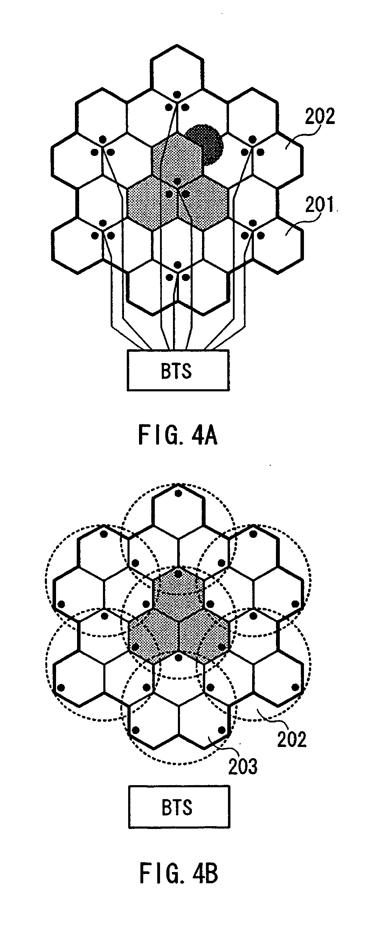

In the present invention, when antennas are said to be distributed, as shown in FIG.4A and FIG.4B, one BTS manages a plurality of cells and each individual sector 202 belonging under area 201 (the bold-lined area, hereinafter referred to as "cluster") that combines several of above cells 203 (each consisting of three sectors in the figures), is provided with an antenna. For example, the antennas may be distributed such that each antenna is positioned at the center of a cell as shown in FIG. 4A (positional concentration), or they may be distributed such that there is distance between the antennas as shown in FIG.4B.

Incidentally, as a distributed antenna system, "EFFICIENCY OF A NEW MICROCELL SYSTEM" (IEEE VTC'92) by W.C.Y.LEE proposes one pattern of configuration, in which one cell is covered by a plurality of distributed sub micro-cells (also referred to as "zones") . However, this system does not teach that the cells are divided by virtue of sectorization and each cell is providedwith an antenna, and thus, in this regard, differs from the sector and antenna distribution of the present invention.

Furthermore, it is different from the conventional distribution of a plurality of antennas within the same cell or sector (so-called transmission/reception diversity). Transmission diversity deteriorates severely when there is a propagation delay difference. Moreover, although transmission diversity utilizes the same spread codes (i.e. channel code and scrambling code) , the present embodiment utilizes different spread codes for the distributed sectors. Provided that a number of sectors are distributed, MS recognizes different sectors (areas) from the downlink spreading codes (scrambling codes), and HO control is performed accordingly. In this regard, too, the difference is obvious.

The signal subjected to radio reception processing in distributed radio sections 102-1 - 102-N is transmitted to demodulator 103 of BTS 103 through transmission path. The case here describes that a baseband signal after the radio reception processing is transmitted. However, intermediate frequency signals and high-frequency signals can be transmitted as well insofar as antennas are distributed. As for the transmission path, this can be metal, light, and radio or the like.

With respect to each signal transmitted from distributed radio sections 102-1 - 102-N after the radio reception processing, demodulator 1031 of BTS 103 selects received paths based on HO information and the received levels of the desired waves from the respective sectors, and performs maximum ratio combining. In this way, maximum ratio combining is performed with not all signals from all the sectors; basically, only the signals from those sectors in the HO state are subject to selection for maximum ratio combining. Accordingly, with reference to the HO information from the upper layer, demodulator 1031 extracts the signals from the sectors involved in HO, and performs maximum ratio combining using the extracted sector signals. Incidentally, the sectors that perform maximum ratio combining here are not limited to those in the HO state. By adding nearby sectors thereto, and by measuring the received levels of the desired waves with respect to a broader range of sectors including the nearby sectors, it is possible to select received paths from a broad range of sectors such as above and perform maximum ratio combining.

That is to say, in conventional DHO, each BTS individually performs demodulation processing, and sends demodulated data to RNC. In other words, since demodulated data is subjected to selection diversity in RNC, it is not possible to perform maximum ratio combining across cells during demodulation processing. However, since the present embodiment employs a configuration in which signals received in distributed antennas are processed by one BTS, it is possible to perform maximum ratio combining on an inter-cell scale in demodulator 1031 with each signal after radio reception processing.

The demodulated data after the demodulation processing in demodulator 1031 is output to SIR measurer 1032. In SIR measurer 1032, SIR is measured using a known signal (PL signal) contained in the demodulated data. In this case, the demodulated data has been throughmaximum ratio combining and therefore in a condition of high reliability. Accordingly, the measured SIR becomes a close level to the quality of communication, hence improved reliability.

The measured SIR is output to adder 1033 and there compared to the target SIR transmitted from RNC, and, based on the result of the comparison, an uplink TPC command is generated in TPC command determiner 1034.

With reference to the HO information, with respect only to those sectors in the HO state, is the TPC command multiplexed with transmission data in multiplexer 1035, and, after modulation processing, transmitted to each of distributed radio sections 102-1 -102-N. Consequently, the antennas distributed in the respective sectors in the HO state transmit identical uplink TPC commands to MS 107. On the other hand, with respect to the sectors not in the HO state, the signals from their channels, including control signals, are not transmitted. Incidentally, HO information is the same information as the information transmitted from the upper layer to demodulator 1031.

In short, the configuration of the present embodiment allows a single BTS to process the signals received in the antennas distributed in respective sectors. Consequently, demodulation processing, received SIR measurement, and uplink TPC command determination that are conventionally performed on a per BTS basis, become unnecessary. By virtue of this, uplink TPC commands transmitted from the respective cells do not differ even in inter-cell HO, which makes such control that a communication terminal increases the transmission power only when all the commands from the cells or sectors in the HO state command on "UP" unnecessary.

With respect to each of these sectors, identical uplink TPC commands are multiplexed with transmission data, and transmitted to MS 107 as a downlink signal. In MS 107, provided that the uplink TPC commands contained in downlink signals give the same instructions under the same BTS (in the same cluster), the demodulation processing and the decision for transmission power control for individual uplink TPC commands conventionally required in inter-cell HO, become unnecessary. By this means, the processing load of DHO on the MS side can be reduced. Moreover, given the identical uplink TPC commands, MS 107 is able to performmaximum ratio combining and demodulation with signals transmitted from a number of sectors. By this means, transmission errors with downlink TPC commands in uplink transmission power control can be reduced, hence more reliable downlink transmission power control.

Next, the advantage of the cellular wireless transmission apparatus of the present embodiment will be described in more details.

First, the instability of uplink transmission power control during DHO, and the loss over selection combination in RNC are solved.

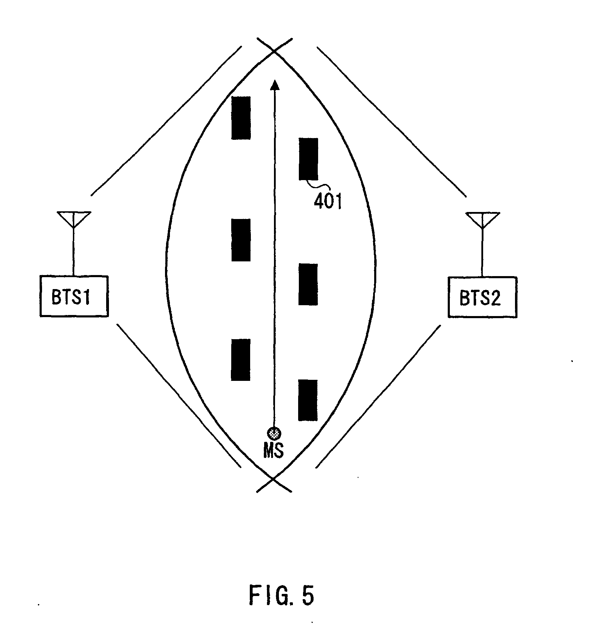

In an area where shadowing variation is substantial, if communication is performed with only one antenna (sector), a sudden change may occur in the transmission environment (i.e. a path loss variation) that makes it difficult to maintain the channel quality through transmission power control alone, and this might result in extreme channel quality deterioration or even in channel disconnection. For instance, with reference to FIG. 5, considering the case where MS moves in the direction of the arrow, if obstacle 401 creates a shadowing condition while communication is performed with BTS 1 or with BTS 2 alone, extreme cannel quality deterioration or channel disconnection may occur.

For this reason, a CDMA system, making the best of the characteristics of soft handover, maintains the HO state with as many as possible sectors (or cells), so that even if the path to a site on one end deteriorates, communication can be retained using another path, thereby maintaining the channel quality stable.

However, upon reception of the uplink during DHO where shadowing variation is substantial, phenomena occur where MS changes the transmission power by a significant degree and the quality of communication becomes unstable. For instance, if there is a sharp decrease in the received level (where in FIG.5 obstacle 401 hides MS from BTS 1), a low-SIR condition occurs in BTS 1 where delay profiles cannot identify paths. Finger assignment may fail correct operations, or synchronization might fail.

A suspected cause of the above phenomena is that, when the shadowing creates a condition where propagation loss is extremely large with one BTS (BTS 1 in FIG.5) and too little with the other BTS (BTS 2 in FIG.5), MS responds to the uplink TPC command from BTS 2 that indicates "DOWN."

Where base station antennas are low in height such as in micro-cells, such phenomena of instability due to shadowing variation are expected to occur at a higher rate (the location rate).

Moreover, where finger assignment is incorrect, SIR level measurement produces irregular values (usually low). If, under the circumstance, the condition regarding the shadowing suddenly reverses, that is to say, with reference to FIG.5, if MS moves from behind obstacle 401 and the view thereof to BTS 1 clears, MS will still increase the transmission power following the commands from BTS 1 that command on "UP," due to substantial transmission loss behind obstacle 401.

In such case, even when path search and finger assignment resume their correct operations, the quality of communication has not yet recovered to a sufficient level, and a delay may still occur by several frames until the correct SIR level can be calculated. In other words, if MS moves from behind obstacle 401 and the view thereof to BTS 1 clears, BTS 1, given that the SIR level is still low, will still continue transmitting "UP," and the received level of the uplink will overshoot. Then when several frames later the correct SIR is obtained, a "DOWN" command is issued quickly, and with this the received SIR becomes stable.

In a case such as this where the path loss between BTS's changes dramatically due to shadowing, for the system as a whole, it is preferable to maintain the HO state between the BTS's while allowing no area to have unstable uplink transmission power.

Such state of instability occurs where, for instance, each BTS measures SIR for the uplink, and, based on the result of this measurement, individually generates and sends uplink TPC commands to MS, or where, due to operation rules regarding transmission power control by MS in response to varying uplink TPC commands, only the TPC commands from BTS of one side meets compliance, while the received SIR or the received condition of BTS of the other side are not given consideration.

Phenomena like these occur when remotely located BTS's perform uplink transmission power control in an autonomous and decentralized manner, and are conventionally difficult to avoid. Moreover, since received data demodulated in respective BTS's are put to selection-combining in RNC to maintain the required quality, the required SIR in each BTS needs to be set high, and this results in a decrease in system capacity, that is to say, this results in a system loss.

The present embodiment allows a single BTS to perform maximum ratio combining and demodulation for the signals received in remotely located sectors, and this makes it possible to obtain highly reliable SIR. An uplink TPC command is generated using this highly reliable SIR and sent to all sectors. In other words, transmission power control is performed using identical TPC commands, and it is thus possible to follow shadowing variation and prevent the phenomena of unstable transmission power control due to shadowing variation. Moreover, not each BTS's demodulation data is subject to selection combining as it is conventionally. Instead, received signals are subject to selection combining on a per sector basis. Consequently, the SIR required for selection combining does not need to be set high, hence minimized decrease in system capacity.

Second, the instability due to the imbalance between downlink transmission powers during DHO can be solved.

During DHO, not only the uplink, but also the downlink becomes unstable. Generally, downlink TPC commands transmitted from MS come in one pattern and are not controlled on a per BTS basis, and accordingly, the downlink transmission power of communication channels is assumed to be common between BTS's.

Nevertheless, in reality, between base stations involved in HO, an imbalance in the transmission power (power unbalance) occurs from reception errors with TPC commands (hereinafter "TPC error") for the inner-loop type transmission power control for the downlink embedded in the uplink. To prevent this, inter-base station adjustment loop is regulated as an additional function of the inner loop type transmission power control.

With this inter-base station adjustment loop, the i+lth transmission power is calculated, as shown in the below formula, by adding transmission power PREF specified by RNC, an index that makes the transmission power difference 0 (e.g. r=0.96/slot), and the proportion of inner-loop type transmission power control to the ith transmission power.

$$P1\ (i+1) = P1\ (1) + (1-r)\ (PREF-P1\ (i))$$

$$+ SINNERLOOP1 + TPCerror$$

With this function, the power balance can be maintained over a considerably long period as compared to the period of the inner-loop type transmission power control. For this reason, during DHO where shadowing variation is substantial and where, as explained earlier in relation to the uplink instability, propagation loss is extremely large with one BTS and too little with the other BTS, the imbalance in transmission power between BTS's occurs frequently. Likewise, in the long-term inter-base station adjustment loop, imbalance cannot be solved over a short period of time. Furthermore, during this period, not only the quality of communication becomes instable, but also there is a possibility that other base stations receive interference.

As thus described, although from the perspective of the system it is desirable to keep the HO state between BTS's, when the path loss fluctuates dramatically between BTS's due to shadowing, the imbalance between transmission powers between BTS's is likely to occur. Such state of instability occurs where, for instance, each BTS individually demodulates downlink TPC commands and based on the result thereof controls the transmission power, or where, due to the operation rules regarding uplink transmission power control, only one BTS prevails on the moment level, and consequently, the received SIR and the received condition of other BTS's are not given consideration, and the likelihood of downlink TPC errors thus increases with one BTS. Phenomena like these occur when remotely located cells (sectors or BTS's) perform downlink transmission power control in an autonomous and decentralized manner, and are conventionally difficult to avoid.

The present embodiment allows a single BTS to perform maximum ratio combining for signals received in respective sectors at distant locations (cells) to demodulate a downlink TPC command. Furthermore each sector in the HO state performs downlink transmission power control using the above shared TPC command, so that it is possible to prevent disproportioned likelihood of downlink TPC errors between cells in a cluster. By this means, it is possible to prevent the instability in the quality of communication on the downlink.

The cellular wireless transmission apparatus of the present embodiment makes it possible to perform SHO in quality of DHO, which is used in conventional cellular wireless transmission apparatus, and it is thus possible to reduce the number of times of DHO that requires heavy processing load, in a given service area.

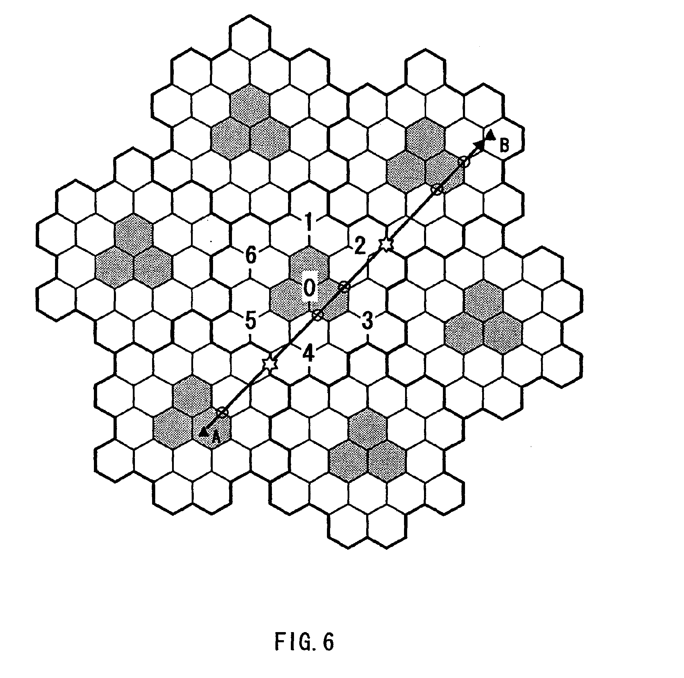

In other words, according to the present embodiment, DHO is necessary only when going beyond the cluster (the bold-line in FIG.6), and consequently, compared to conventional methods that require DHO when going beyond the cell, the number of times DHO is performed decreases . By this means it is possible to downscale the scale of the processing circuit.

For example, with reference to FIG.6, when MS moves from point A to point B, a conventional method requires DHO when crossing the cells, and the number of times DHO is performed becomes 7 by total (i.e. the total number of the circles and stars in FIG.6 combined). However, the present embodiment requires DHO only when crossing the clusters that consist of a plurality of cells, and so the number of times DHO is required decreases sharply to 2 (i.e. the number of the stars in FIG.6).

By thus reducing the number of times of DHO is performed, it is possible to reduce HO processing such as channel setup and information transmission with a new BTS on Iub, while reducing the impact of HO control delays upon system capacity, so that HO control can be speeded up while the processing load thereof is reduced. Moreover, with the number of DHO times decreasing thus, the amount of compensation processing by the inter-base station adjustment loop can be reduced and the instability in the quality on the downlink due to unbalanced powers can be prevented.

The present embodiment thus provides a cellular wireless transmission apparatus and cellular wireless transmission method that can maintain the quality of communication, maximize system capacity, and reduce the scale of the processing circuit, which are particularly effective when BTS antennas are low due the use of micro-cells.

(Embodiment 2)

A case will be described here with the present embodiment where DHO is performed when the cluster ranges each consisting of a plurality of cells are crossed.

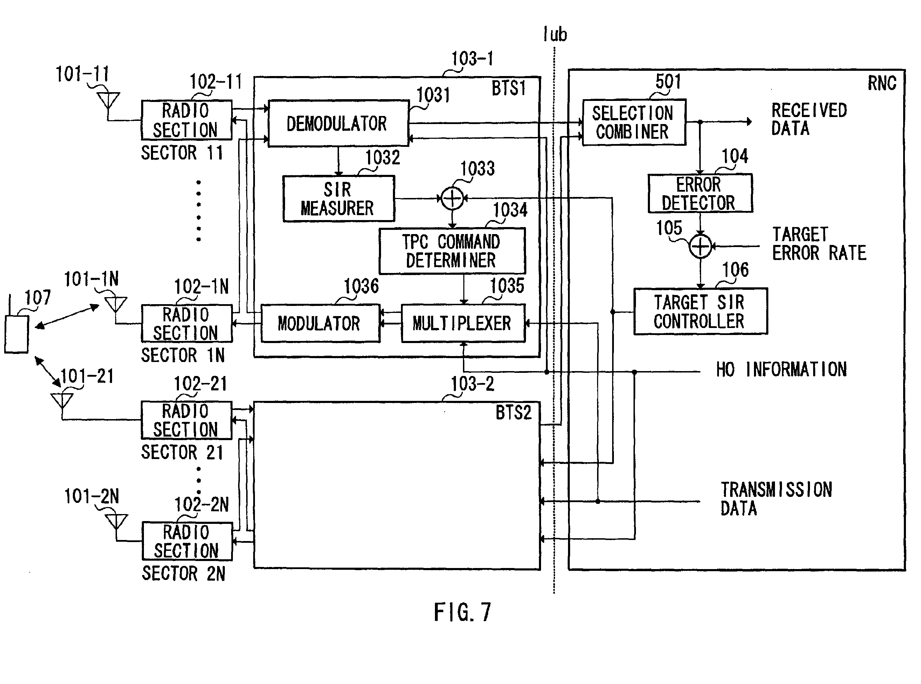

FIG.7 is a block diagram showing a configuration of the cellular wireless transmission apparatus of Embodiment 2 of the present invention. Parts in FIG.7 identical to those in above FIG.3 are assigned the same codes as in FIG.3 and their detailed explanations are omitted.

In FIG.7, one cluster area (an area consisting of a plurality of cells) is managed by distributed antennas 101-11 - 101-1N, and radio sections 102-11 - 102-1N which the above antennas 101-11 - 101-1N are equipped with. Signals output from antennas 101-11 - 101-1N and radio sections 102-11 - 102-1N are processed in BTS 1 (103-1). One cluster area (an area consisting of a plurality of cells) is managed by distributed antennas 101-21 - 101-2N, and radio sections 101-21 - 101-2N which the above antennas 101-21 - 101-2N are equipped with. Signals transmitted from radio antennas 101-21 - 101-2N and radio sections 102-21 - 102-2N are processed in BTS 2 (103-2). Moreover, RNC is equipped with selection combiner 501 that selects and combines demodulated data transmitted from each of BTS's 103-1 and 103-2. Incidentally, BTS 103-2 and BTS 103-1 share the same internal configuration.

Signals received in the respective sectors belonging under a cluster area are subject to maximum ratio combining in demodulator 1031 of the single BTS that manages the area, after received paths are selected based on HO information and the received levels of the desired waves from the respective sectors.

That is to say, signals received from sector 11-sector 1N are subject to maximum ratio combining in demodulator 1031 of BTS 103-1. The signal after the maximum ratio combining is output to selection combiner 501 of RNC. In the same way, signals from sector 21 - sector 2N are subject to maximum ratio combining in demodulator1031 of BTS 103-2. The signal after the maximum ratio combining is output to selection combiner 501 of RNC.

From the signal after the maximum ratio combining, selection combiner 501 of RNC selects a signal of good quality and outputs the signal as received data. Also, this received data is output to error detector 104, where the error rate of this received data is obtained. The obtained error rate is output to adder 105.

A target error rate is output to adder 105, where a decision is made as to whether the obtained error rate is high or low compared to the target error rate. The result of this decision is output to target SIR controller 106, which then controls the target SIR in accordance with the result of the decision (outer-loop). This target SIR is output to adder 1033 of BTS 103-1 and to adder 1033 of BTS 103-2.

The SIR level measured in SIR measurer 1032 of each of BTS's 103-1 and 103-2 using the demodulated data is output to adder 1033. A target SIR for the inner-loop is output from RNC to adder 1033, where a calculation is performed as to whether the measured SIR level is high or low compared to the target SIR. The information of the difference (i. e. whether or not the measured SIR level is higher or lower than the target SIR level) is output to TPC command determiner 1034.

TPC command determiner 1034 decides whether to increase (UP) or decrease (DOWN) the transmission power according to this difference information, generates an uplink TPC command to that effect, and outputs the TPC command to multiplexer 1035.

The uplink TPC commands generated thus vary between BTS 103-1 and BTS 103-2, but are identical between the distributed sectors managed by a sector.

As shown in FIG.6, the present embodiment significantly reduces the frequency of DHO, and consequently the load of HOprocessing (e. g. channel setup and information transmission to a new BTS upon Iub) on Iub can be reduced.

Moreover, the omission of mutual decoding processing between BTS and MS, SIR measurement for TPC, the generation of TPC commands for transmission power control (transmitting side), and TPC command determination processing (receiving side) become possible. Furthermore, the number of times selection combining processing is performed in RNC (i.e. the number of channels required per time unit) can be reduced.

(Embodiment 3)

A case will be described here with the present embodiment where centralized control (shared control) is applied to uplink and downlink transmission power controls that are conventionally controlled in an autonomous and decentralized manner in each BTS upon DHO, or to the selection of transmitting antennas through SSDT (Site Selection Diversity Transmit Power Control), that is to say, to control signals transmitted from MS and to uplink transmission power control, thereby improving the reception performance and the accuracy of SIR measurement with these control signals for improved efficiency of transmission by SSDT.

Under SSDT by DPCH (Dedicated Physical CHannel) on the downlink, MS measures the condition of the channel to each cell during DHO (RSCP (received power) of CPICH (Common PIlot CHannal)), selects the cell of the highest level (called "primary cell"), transmits the ID code of this cell (or the cell selection word) on an uplink control signal (FBI (FeedBack Indicator).

From the FBI signal received (i.e. an ID code or a cell selection word), BTS decides whether or not it is the selected cell. If the BTS decides that it is the selected cell, it transmits data (DPDCH (Dedicated Physical Data Channel), and if the BTS is not the selected cell, it transmits only transmission stop or control signals (Dedicated Physical Control Channel).

If, during DHO, BTS in a mediocre channel condition performs transmission at a high transmission power, this results in a system loss that causes considerable interference to other stations and contributes little to the improvement of the channel quality with itself. However, the above configuration can prevent such loss. A cell actually often has several sectors in the majority of cases, and in such cases cell selection changes to sector selection, and transmission is performed only from the relevant sectors.

However, FBI's on the uplink have high error rates, and if a cell is selected and yet a decision is erroneously made (i.e. incomplete data transmission), during its selection period, no data is transmitted from any cell, which, in real time transmission such as sound transmission, causes severe channel quality deterioration.

In view of the above, if upon a number of condition a cell is decided not to be the primary cell, transmission stop or control signals (DPCCH) alone are transmitted. Incidentally, as with SSDT, the application thereof to DPCCH including FBI and DPCH including DPDCH is provided.

As described above, in order to prevent incomplete transmission that results from failure to receive a transmission cell selection word transmitted from MS, if the received SIR of a transmission cell selection word is below the threshold level, the transmission will continue regardless of the decoding result of the transmission cell selection word (i.e. protection of cell selection word).

According to "Performance on Site Independent Diversity Transmit Power Control (SIDTPC) among DPCHs with Various Symbol Rates for Inter-Cell Site Diversity in W-CDMA Forward Link," RCS2000-241, by Morimoto, Higuchi and Sawahashi, when a plurality of cells perform transmission simultaneously, this may diminish the basic advantage of SSDT.

Moreover, cases have been reported that if, at a moving speed of approximately 40km/h (fD=80Hz), the inter-cell path loss during DHO is small, rather than transmitting from one side by SSDT, transmitting from both sides (SSDT is not performed) produces better results. If the path loss difference is small, the diversity gain between the cells obtained by transmitting from the both cells is substantial. Consequently, an assumption can be made such that the above advantage is because the effect of interference reduction through the above inter-cell diversity gain is greater than the effect of interference reduction through SSDT, which is switching transmission from one cell.

Furthermore, during low-speed movement, the likelihood that transmission ends incomplete or that several cells perform transmission simultaneously inevitably becomes high due to frequent cell selection word errors in every cell (BTS), and cases have been reported that normal transmission methods (that do not adopt SSDT) work better.

Phenomena like these occur when remotely located cells (sectors or BTS's) perform downlink transmission power control in an autonomous and decentralized manner, and are conventionally difficult to avoid.

According to the present embodiment, ON/OFF control for multiplexing transmission data signals is performed per sector based on accurate transmitting sector identification, and transmitting antennas are switched through adequate sector selection.

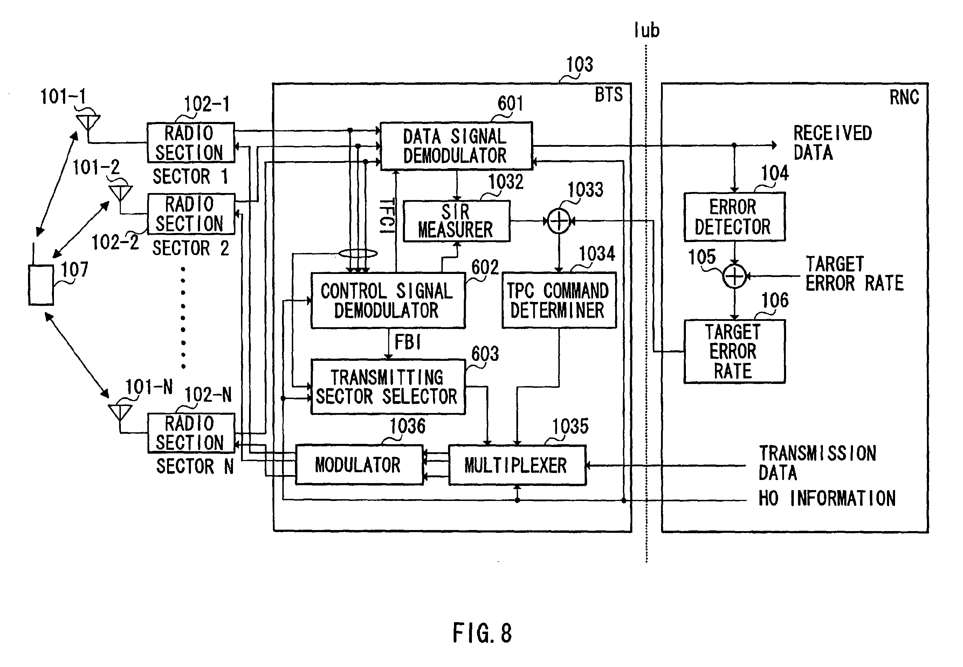

FIG.8 is a block diagram showing a configuration of the cellular wireless transmission apparatus of Embodiment 3 of the present invention. Parts in FIG.8 identical to those in above FIG.3 are assigned the same codes as in FIG.3 and their detailed explanations are omitted.

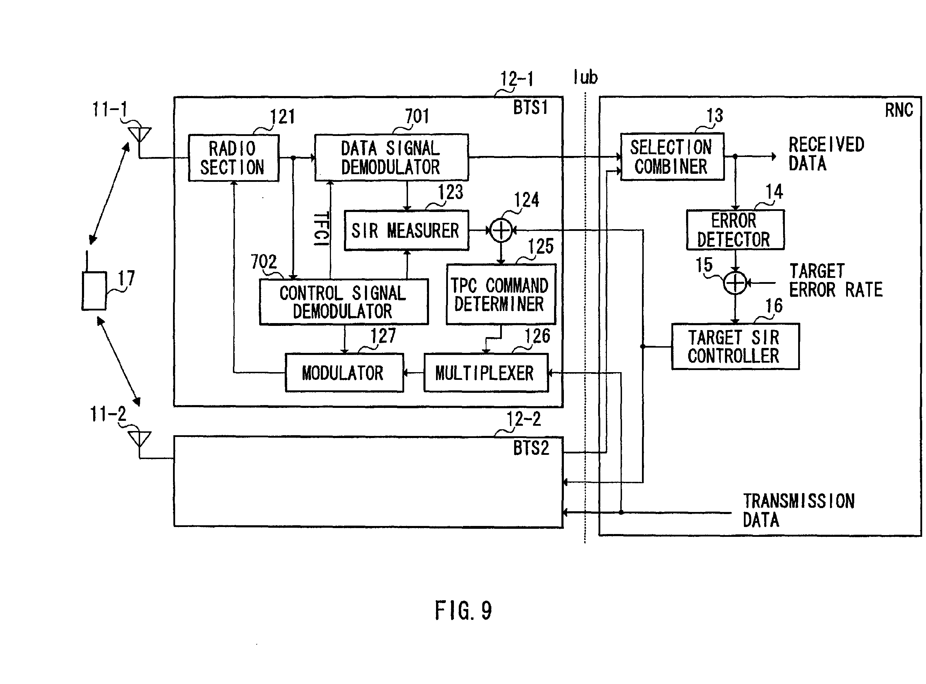

Moreover, FIG.9 is a block diagram showing a configuration of a conventional cellular wireless transmission apparatus. Parts in FIG.9 identical to those in above FIG.1 are assigned the same codes as in FIG.1 and their detailed explanations are omitted.

The cellular wireless transmission apparatus shown in FIG.8 comprises data signal demodulator 601 that performs demodulation processing with respect to the data signals of the signals from respective sectors, control signal demodulator 602 that performs demodulation processing with respect to the control signals of the signals from respective sectors, and transmitting sector selector 603 that selects transmitting sectors according to the control signals (FBI).

A signal subjected to radio reception processing in distributed radio sections 102-1 - 102-N is sent to data signal demodulator 601 and control signal demodulator 602 of BTS 103 through transmission path.

Data signal demodulator 601 of BTS 103 performs demodulation processing witheachsignaltransmittedfrom distributed radio sections 102-1 - 102-N after radio reception processing in accordance with TFCI output from control signal demodulator 602, and outputs the signal as received data. Data signal demodulator 601, by way of selecting received paths based on HO information and the received levels of the desired waves from the respective sectors, is able to perform maximum ratio combining and demodulation for received signals that match several conventional BTS's in proportion.

In this way, maximum ratio combining is performed with not all signals from all sectors, but only the signals from those sectors in the HO state are subject to maximum ratio combining. Accordingly, with reference to the HO information from the upper layer, data signal demodulator 601 extracts the signals from the sectors involved in HO, and performs maximum ratio combining using the extracted sector signals. Incidentally, the sectors that perform maximum ratio combining here are not limited to those in the HO state. By adding nearby sectors thereto, and by measuring the received levels of the desired waves with respect to a broader range of sectors including the nearby sectors, it is possible to select received paths from a broad range of sectors such as above and perform maximum ratio combining.

The demodulated data subjected to demodulation processing in demodulator 1031 is output to SIR measurer 1032, where the received SIR is measured using the known signal (PL signal) included in the demodulated data.

By this means only one demodulation circuit is required, and accordingly the scale of the processing circuit can be reduced. In addition, the received quality of TFCI improves through maximum ratio combining, and accordingly the performance of demodulation improves. Furthermore, SIR measurement also approaches the final quality of communication, hence improved reliability.

The measured received SIR is output to adder 1033 where it is compared to a target SIR sent from RNC. Then according to the result of the comparison, an uplink TPC command is generated in TPC command determiner 1034.

The uplink TPC command is multiplexed with transmission data in multiplexer 1035, and after demodulation processing, transmitted to each of distributed radio sections 102-1 - 102-N. Consequently, from the respective antennas distributed in the sectors, identical uplink TPC commands are transmitted to MS 107.

Similar to data signal demodulator 601, control signal demodulator 602 selects received paths based on HO information and the received levels of the desired waves from the respective sectors with respect to each signal transmitted from distributed radio sections 102-1 - 102-N after radio reception processing. Then, FBI and TFCI (Transport Format Combination Indicator) are extracted, and FBI is output to transmitting sector selector 603 and TFCI is output to signal demodulator 601.

In this way, maximum ratio combining is performed with not all signals from all sectors, but only the signals from those sectors in the HO state are subject to maximum ratio combining. Accordingly, with reference to the HO information from the upper layer, data signal demodulator 601 extracts the signals from the sectors involved in HO, and performs maximum ratio combining using the extracted sector signals. Incidentally, the sectors that perform maximum ratio combining here are not limited to those in the HO state. By adding nearby sectors thereto, and by measuring the received levels of the desired waves with respect to a broader range of sectors including the nearby sectors, it is possible to select received paths from a broad range of sectors such as above and perform maximum ratio combining.

This configuration makes maximum ratio combining for received signals that match several conventional BTS' s in proportion possible. Through this maximum ratio combining, the performance of receiving FBI, which is a control signal under SSDT, improves, hence improved reliability of FBI. As a result, the efficiency of transmission under SSDT improves. Moreover, only one demodulation circuit is required so that the scale of the processing circuit can be reduced.

FBI includes the ID code of the sector selected for the highest received level determined based on the result of measuring in MS the condition of the channel to each sector involved in HO using CPICH. Transmitting sector selector 603 checks as to whether the ID code included in FBI is one of a local sector. If the ID code included in FBI is one of a local sector, a control signal is output to the effect of transmitting data from the sector to multiplexer 1035. In this case, transmitting sector selector 603 takes HO information into consideration. In other words, if a sector is involved in HO and furthermore the ID code included in the FBI is one of a local sector, this sector is selected. With respect to the above sector, multiplexer 1035 multiplexes transmission data with uplink TPC commands output to modulator 1036.

Based on the HO information, if sectors other than the above one selected by the ID code are in the HO state, control signals alone, such as uplink TPC commands, are output to demodulator 1036. As with those sectors not in the HO state, the output to modulator 1036 stops. As thus described, in transmitting sector selector 603, the identification of transmitting antennas using accurate FBI becomes possible.

Incidentally, the inner-loop type transmission power control is the same as in Embodiment 1 and Embodiment 2. Moreover, as with those sectors not in the HO state, signals on their channels, including control signals, are not transmitted.

In respect to the conventional cellular wireless transmission apparatus shown in FIG.9, each BTS is equippedwith data signal modulator 701 and control signal modulator 702, checks whether or not the ID code included in FBI is one of the apparatus, and, if the ID code is indeed one of the apparatus, transmits data.

Since each BTS individually selects transmitting sectors, and particularly in uplink transmission power control, if this BTS is not the principal BTS for MS, FBI reception errors become frequent and erroneous decisions occur at a high rate.

In contrast, according to the present embodiment, all the FBI's from the individual sectors are demodulated in control signal demodulator 602 in BTS, and transmitting sectors are selected within the BTS. Therefore, transmitting sectors can be selected accurately using the FBI, and consequently, it is possible to prevent incomplete transmission that results from failure to receive FBI under SSDT, and to prevent reduction in efficiency due to concurrent transmissions from several sectors. As a result, the advantage of SSDT, and consequently capacity on the downlink, improve.

Moreover, the present embodiment enables the application of an improved scheme to SSDT. In other words, since FBI reception errors can be reduced, if the path loss between sectors is small, transmission can be made not only from the sectors selected by the cell selection word (ID code) from MS, but also from other sectors as well.

For instance, even if the received level in each sector (for instance, RSCP of PL symbol per branch) is measured in advance and the primary sector is identified in a clear way, if the relative received levels of other sectors compared to the primary sector fall under a threshold level (i.e. the path loss is small), these sectors also perform transmission.

By virtue of this configuration, when the path loss is small, it is possible to prevent transmission from only one sector by SSDT, reduce the transmission power through diversity gain between the cells or sectors, and achieve greater interference reduction effects.

As a result, the advantage of SSDT effects improves where the path loss is small, and capacity on the downlink improves.

(Embodiment 4)

A case will be described here with the present embodiment where centralized control (shared control) is applied to the selection of transmitting antennas for HSDPA, controlled in each cell during DHO in an autonomous and decentralized way, that is, centralized control (shared control) is applied to control signals transmitted from MS, for improved reception performance with these control signals and for improved transmission efficiency.

HSDPA has been in discussion under 3GPP (3rd Generation Partnership Project) as a method for efficient transmission of high-speed packets. This scheme utilizes radio information, changes the transmission rate by making changes to channel codec, the spreading factor, multiplex number, and modulation (level), thereby improving the average throughput.

In a conventional system, generally, RNC has the scheduling functions for managing the transmission timing for the respective channels in downlink transmission. This is because the management is performed without regards to the condition of the channel, but solely in accordance with the quality of communication services (QoS (Quality of Service), and also because in DHO, too, the transmission timing from a plurality of BTS can be managed and controlled in a simple way.

The above scheduling takes the condition of the channel into account for improved packet transmission efficiency. However, with conventional configurations, control delays between BTS-RNC are big compared to changes in the condition of the channel, and the implementation is thus difficult. Hence there is an idea of providing BTS with scheduling functions, so that scheduling can be performed taking the condition of the channel into consideration in addition to QoS.

On the other hand, with respect to high-speed packets, since the symbol rate is high, the required transmission power is also big compared to other channels. In this case, covering the same area of a low-speed rate (sound) would require considerable transmission power. Because of this, in a CDMA system, interference grows large compared to other channels, which is a factor of decrease in system capacity.

Particularly, when a handover is performed, transmitting from a number of cells or sectors would be a severe interference factor. On the other hand, packets are more tolerant of transmission delays than channel exchange signals (i.e., sound). So, generally, without DHO or SHO, switching is performed through HHO (Hard Handover) (e.g., DSCH (Down-link Shared Channel) in the W-CDMA system).

In contrast, in respect to HSDPA, a scheme (Fast Cell Selection (FCS)) has been proposed whereby, even in the HO state, the cells that actually perform transmission are selected at a high-speed from a number of cells, switched, and transmission is performed. In this case, MS selects the cell of the highest received level and sends this information on the uplink channel.

Each cell, from the selection signal it has received, identifies as to whether the cell is the selected cell (i.e. primary cell). Each cell transmits data only when it identifies that it has been selected, or stops transmission otherwise. By this means, transmission that requires quite high transmission power such as transmission involving high-speed packets is performed from a plurality of cells in mediocre channel condition in the DHO state, and consequently it is possible to prevent considerable interference against other apparatus and at the same time improve the throughput of the local apparatus.

If a number of cells in comparatively good channel condition transmit downlink high-speed packets simultaneously, this will cause considerable interference, and so, a transmission scheme that resembles SSDT, whereby, while the HO state is kept, only one cell performs transmission at a given moment (e.g., per frame). Similar to SSDT, a cell actually often has several sectors in the majority of cases, and in such cases cell selection changes to sector selection, and transmission is performed only from the relevant sectors.

The conventional SSDT is designed for DPCH, and accordingly manages such that timing management including transmission scheduling is identified in RNC, and a number of cells perform transmission at the same timing at all times. By virtue of this, even when transmitting cells switch at a high-speed, MS can receive without a disorder in the packet sequence (i.e., numbers).

If, in the above high-speed packet transmission, transmitting cells switch at a high speed where each cell has scheduling functions that take the condition of the channel into consideration, the sequence (i.e., numbers) of the packets received in MS will be disordered.

A possibility to cope with this problem is that each BTS managing the cells individually manages the information required for a cell to manage the order of packet transmission, such as packet numbers in uplink control signals transmitted from MS (i.e. IP packet numbers or the numbers newly assigned for wireless transmission), so as to make synchronization among a number of cells possible.

In this case, if the cell that performs transmission at the next transmission timing receives the above packet numbers correctly, synchronization between the BTS's of the transmission order can easily be realized. Therefore, only when the transmitting cells switch, by way of sending MCS (Modulation and Coding Scheme: a transmission pattern that indicates the modulation pattern and channel codec pattern) and the multiplex code number to a new cell, even if the first transmission from the new cell is a retransmission of a packet transmitted from an earlier cell, this new BTS can perform the retransmission using the same MCS and code number. By virtue of this, MS of the receiving side becomes capable of combining the packets for improved throughput.

According to the present embodiment, central management of the cells that are distributed enables, in HSDPA, the cell performing the transmission at the next transmission timing to mange the sequence of the packets without disorder or to receive the packets following the correct packet numbers. By this means, synchronization between the cells in the transmission order can easily be realized.

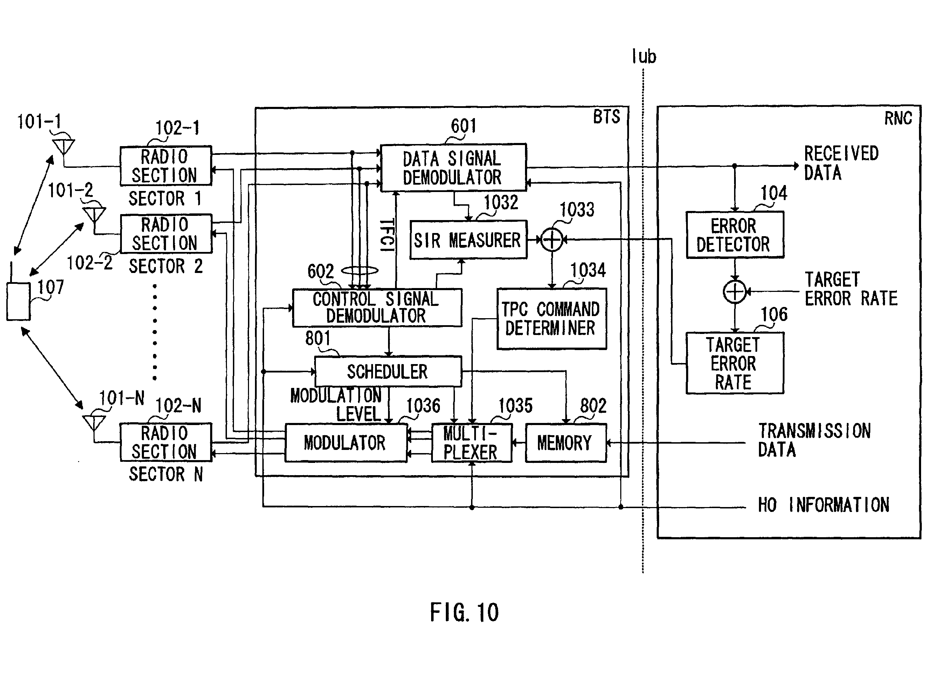

FIG.10 is a block diagram showing a configuration of the cellular wireless transmission apparatus according to Embodiment 4 of the present invention. Parts in FIG.10 identical to those in above FIG.8 are assigned the same codes as in FIG.8 and their detailed explanations are omitted.

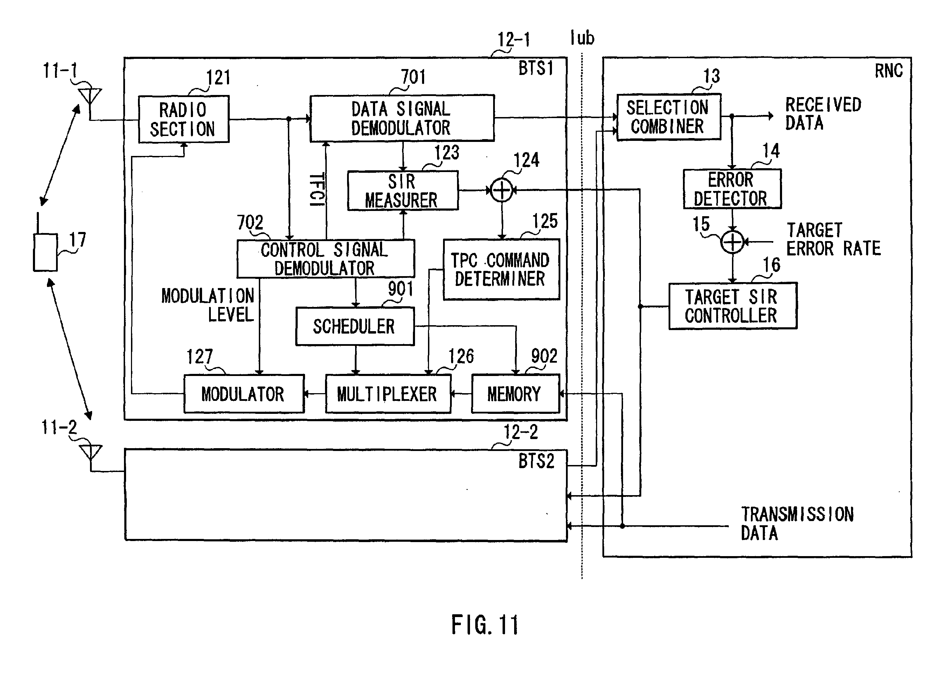

FIG.11 is a block diagram showing a configuration of a conventional cellular wireless transmission apparatus. Parts in FIG.11 identical to those in above FIG.9 are assigned the same codes as in FIG.9 and their detailed explanations are omitted.

The cellular wireless transmission apparatus shown in FIG.10 comprises scheduler 801 that performs scheduling in accordance with control signals demodulated in control signal demodulator 602, and memory 802 that stores high-speed packet data transmitted in advance from upper apparatus (RNC).

Each signal subj ected to radio reception processing in distributed radio sections 102-1 - 102-N is transmitted to data signal demodulator 601 and to control signal demodulator 602 of BTS 103 through transmission path. With respect to each signal transmitted from distributed radio sections 102-1 - 102-N after radio reception processing, data signal demodulator 601 of BTS 103 performs demodulation processing based on TFCI output from control signal demodulator 602, and outputs the signal as received data. Through the selection of received paths based on HO information and the received levels of the desired waves from respective sectors, data signal demodulator 601 of BTS 103 can perform maximum ratio combining and demodulation for received signals that match several conventional BTS's in proportion.

In this way, maximum ratio combining is performed with not all signals from all sectors; basically, only the signals from those sectors in the HO state are subject to maximum ratio combining. Accordingly, with reference to the HO information from the upper layer, data signal demodulator 601 extracts the signals from the sectors involved in HO, and performs maximum ratio combining using the extracted sector signals. Incidentally, the sectors that perform maximum ratio combining here are not limited to those in the HO state. By adding nearby sectors thereto, and by measuring the received levels of the desired waves with respect to a broader range of sectors including the nearby sectors, it is possible to select received paths from a broad range of sectors such as above and perform maximum ratio combining.

The demodulated data that has been subjected to demodulation processing in data signal demodulator 601 is output to SIR measurer 1032, where SIR is measured using a known signal (PL signal) contained in the demodulated data.

By this means only one demodulation circuit is required, and accordingly the scale of the processing circuit can be reduced. In addition, the received quality of TFCI improves through maximum ratio combining, and accordingly the performance of demodulation improves. Furthermore, SIR measurement also approaches the final quality of communication, hence improved reliability.

The measured received SIR is output to adder 1033 where it is compared to a target SIR sent from RNC. Then according to the result of the comparison, an uplink TPC command is generated in TPC command determiner 1034.

In HSDPA transmission, an assisted DPCH attached to HS-DSCH, which is the channel for HSDPA transmission, runs between all sectors in the HO state and MS. With reference to HO information, with respect only to those sectors in the HO sate, the uplink TPC command is multiplexed with the above assisted DPCH in multiplexer 1035, and, after demodulation processing, transmitted to distributed radio sections 102-1 - 102-N.

Consequently, identical uplink TPC commands are transmitted from the antennas distributed in respective sectors in the HO state to MS 107 on the above assisted DPCH.

For each signal transmitted from distributed radio sections 102-1 - 102-N, similar to data signal demodulator 601, control signal demodulator 602 selects received paths based on HO information and the received levels of the desired waves from the respective sectors, and then performs demodulation processing, extracts FBI, MCS (modulation level and coding rate), packet sequence number, multiplex code number, automatic repeat request (ARQ), and TFCI and so on, outputs the FBI, MCS, and automatic repeat request (ARQ) and so on to scheduler 801, and outputs the TFCI to data signal demodulator 601.

Once again, maximum ratio combining is performed with not all signals from all sectors; basically, only the signals from those sectors in the HO state are subject to selection for maximum ratio combining. Accordingly, with reference to the HO information from the upper layer, control signal demodulator 602 extracts the signals from the sectors involved in HO, and performs maximum ratio combining using the extracted sector signals. Incidentally, the sectors that perform maximum ratio combining here are not limited to those in the HO state. By adding nearby sectors thereto, and by measuring the received levels of the desired waves with respect to a broader range of sectors including the nearby sectors, it is possible to select received paths from a broad range of sectors such as above and perform maximum ratio combining.

By this configuration, maximum ratio combining can be performed for received signals that match several conventional BTS's in proportion. Through maximum ratio combining, the reception performance improves with respect to FBI, ARQ, and packet sequence numbers and such, which are control signals of HSDPA. As the reliability of these control signals thus improves, the efficiency of FCS transmission also improves. Moreover, only one demodulation circuit is required, so that the scale of the processing circuit can be reduced.

Using CPICH, MS measures the condition of the channel for each sector in the HO state, and FBI includes the ID code of the sector selected for the highest received level determined based on the result of the measurement.

Scheduler 801 checks as to whether the ID code included in FBI is one of a local sector and, if the ID code in FBI is indeed one of a local sector, outputs to multiplexer 1035 a control signal to the effect of sending transmission data from the sector in question.

Scheduler 801 here takes HO information into account. In other words, if a sector is involved in HO and furthermore the ID code included in the FBI is one of a local sector, this sector will be selected.

Based on the HO information, with respect to other sectors than the one selected above by the ID, if these are in the HO state, multiplexer 1035 outputs to modulator 1036 only the signals of the assisted DPCH that include control signals such as uplink TPC commands. As with those sectors not in the HO state, the output to modulator 1036 stops. As thus described, in transmitting sector selector 603, the identification of transmitting antennas using accurate FBI becomes possible.

Based furthermore on the information of packet sequence numbers and automatic repeat request, scheduler 801 schedules packet transmission and outputs the schedule information to multiplexer 1035. In accordance with the schedule information, multiplexer 1035 outputs the transmission data (packets) stored in memory 802 to modulator 1036.

Scheduler 801 furthermore determines the modulation level and coding rate, based on the information of the CIR (Carrier to Interference Ratio) measured in MS as a downlink channel quality or based on the information of the MCS determined on the MS side. This modulation level is output to modulator 1036, and the coding rate is output to a coder (not illustrated in the figure). Then, coding is performed with the packets that are to be transmitted at the determined coding rate, and likewise modulation is performed at the determined modulation level. In this case again, as described above, HO information is taken into account. By this means, MCS-related information can be received correctly, and accordingly, adaptive modulation and coding can be performed correctly.

The inner-loop type transmission power control is the same as in the above Embodiments 1 and 2. With respect to the sectors not in the HO state, signals from their channels, including control signals, are not transmitted.

According to the conventional cellular wireless transmission apparatus shown in FIG.11, every BTS comprises scheduler 901 and memory 902, and each BTS performs HSDPA in accordance with the FBI, MCS, packet numbers, and retransmission requests included in control signals.

According to the present embodiment, since a single BTS performs scheduling and memorization and thus performs centralized control over distributed sectors, it is possible to apply maximum ratio combining to the signals used for HSDPA across remotely distributed cells and receive them correctly. Consequently, the sector that performs transmission at the next transmission timing can be properly provided with the information of the ID code (cell selection word), and as a result, the efficiency of transmission by HSDPA improves. Since the centralized control makes synchronization between a number of cells possible, the problem that the order of packets (numbers) will be disordered when transmitting cells or sectors switch at a high speed where the individual cells or sectors are each equipped with scheduling functions.

Moreover, since retransmission requests are received correctly, the efficiency of HARQ (Hybrid ARQ) improves. Inotherwords, evenwhen the first transmission from a new cell is a retransmission of a packet transmitted from an earlier cell, the retransmission from the new cell managed under the same BTS can use the same MCS and multiplex code number, and this makes MS on the receiving side capable of combining the packets by HARQ for improved throughput. By this means, it is possible to reduce the transmission power for the assisted DPCCH and increase capacity on the uplink.

Moreover, not every cell needs to have a large memory for high-speed packets, and this makes it possible to reduce the required memory volume per area (e.g., per cluster).

(Embodiment 5)

A case will be described here with the present embodiment where the cellular wireless transmission apparatus of the present invention is applied to an IP network.

Following the application of IP to networks, the application of IP to wireless systems has been under discussion. This is to cope with the diversification of high speed data communication services such as combined services of sound and data. The application of IP to networks originates from the expectation that configurations with versatile IP network apparatus will be more cost-effective than a switchboard in terms of infrastructural and management costs, and that new services can be developed and provided in a short period of time by simply adding IP application servers.

There is an assumption that, through the promotion of IP applications, or by concentrating the traffic in wireless systems in the IP-based backbone network, data transmission costs can be reduced. In the first stage, the core network (CN) will adopt IP in order to reduce system configuration costs. In the second stage, RAN (Radio Access Network) will adopt IP. In addition, with the purpose of integrating applications and services on the Internet in view, there has been movement towards the realization of "ALL IP" all the way to wireless zones (i.e. terminals) . Moreover, a mobile IP has been proposed and standardized as a protocol to provide mobility functions for mobile nodes on the Internet in IP transmission.

With regard to the application of IP to RAN, the problem remains with inter-BTS HO (macro diversity) , that is, the realization of DHO and the realization of routing control (i.e., mobility functions) that accords with mobility.

The implementation of DHO casts many problems such as that transmission has to be made to a number of BTS's simultaneously (i.e. multi-cast) through IP transmission, and that the timings of transmission by wireless need to be synchronized.

In particular, in case of micro-cells, the implementation becomes a bigger problem. For instance, when the cells are distributed minutely for conversion into micro-cells, the HO rate will increase, and the wireless cells (BTS) of affiliation will switch frequently, and these create problems, for instance, that routing control such as changing routing tables becomes complex, that the volume of control information (i.e. registration processing) will increase, and that the delay time in real time type data such as VoIP (Voice Over IP) will increase.

The application of the mobile IP still causes problems. For example, registration has to be made upon every inter-cell HO, which will lead to an enormous amount of registration processing. As a solution to this problem, a plurality of cells are connected as one network, and inter-cell HO within this network utilizes other protocols (e.g., cellular IP, HAWAII. etc.).

The cellular IP provides local mobility and HO functions on IP, and, when used in combination with the mobile IP, offers mobility functions of a global scale. The cellular IP provides the processing methods for "registration processing" and "handover processing" performed when a wireless mobile apparatus specific to mobile communication moves across wireless cells, while the mobile IP does not provide these methods, and the cellular IP thus provides highly efficient local mobility functions that skip superfluous processing such as position registration. As for the method of packet synchronization during HO and the method of selection combining, these are not provided and require further discussion.

As described above, the application of IP to networks casts many problems. The cellular wireless transmission apparatus of the present invention, however, defines the area conventionally composed of numerous cells as a cluster under the centralized (connected) management of under a single BTS. By this means, compliance to mobility becomes simpler (simplification (processing load reduction)). Furthermore, DHO, requiring multi-cast and the synchronization of the timings of wireless transmission, can be readily implemented.

Furthermore in relation to the application of IP, by concentrating a plurality of BTS's into one BTS, DHO can switch to SHO. This can significantly reduce the DHO rate itself. It is then possible to reduce the volume of data that is multi-cast to a plurality of BTS's, and furthermore to reduce the amount of control signals required for the synchronization of the timings of wireless transmission.

Especially, even in case of micro-cells, since these micro cells concentrate under one BTS, the DHO rate will decrease.

Moreover, even if HO switches the cell (sector) to belong, the interval that requires routing control by the IP address extends only to the centralized BTS, so that transmission to each micro-cell is unnecessary. As a result, routing control is simplified.

This can spare an enormous amount of registration processing, and accordingly, where the mobile IP is applied, there is no need to implement the cellular IP, leaving a possibility that the mobile IP alone suffices to implement IP transmission.

Moreover, by performing conventional cell (sector) selection, HO control, SSDT, and FCS, BTS will learn the sector (antenna) of the transmissiondestination, thereby making transmission from BTS to the terminal more readily implementable (i.e. transmission between wireless intervals).

Moreover, conventionally, the same data needs to be transmitted (i.e. multi-cast) from upper apparatus to a plurality of cells in the DHO state, and stored. However, the present embodiment makes multi-cast unnecessary by virtue of the central BTS.

Although the timing of transmission in the air needs to be adjusted among several cells in DHO, with the centralized BTS of the present embodiment, the same can be performed between the sectors under one BTS. In other words, the conventional inter-cell adjustment has simply changed to an inter-sector adjustment, thereby making the above timing adjustment more readily implementable.

The present invention is not limited to the above Embodiments 1 to 5. Various changes and modifications can be made to the present invention without departing from the scope of the invention. For one example, Embodiments 1 to 5 can be combined for implementation.

One mode of embodiment of the present invention employs a configuration of a cellular wireless transmission apparatus that manages a cluster composed of a plurality of cells each consisting of a plurality sectors, and that comprises: an antenna distributed in the sectors; a demodulator that, upon a handover, performs a maximum ratio combining of a signal received from the sectors involved in the handover and obtains demodulated data; a transmission power control signal generator that generates an uplink transmission power control signal in accordance with the quality of the received signal after the maximum ratio combining or the quality of the demodulated data (e.g., received SIR); and a transmitter that transmits transmission data and the same uplink transmission power control signal to all the sectors involved in the handover.

This configuration allows a single apparatus (BTS) to process signals received in the antennas distributed in respective sectors. Accordingly, demodulation processing, received SIR measurement, and uplink TPC command determination do not have to be performed under every BTS provided in each cell as in conventional ways.

By virtue of this, even in inter-cell handover, since the uplink TPC commands transmitted from the respective cells do not vary, the communication terminal does not need perform such control as to increases the transmission power only when all the commands from the cells or sectors in the handover state command on "UP."

Thus it is possible to reduce the load of handover processing on Iub (i.e., information transmission and channel set up with new BTS on Iub). Moreover, mutual decoding processing between BTS and MS, SIR measurement, the generation of TPC commands for transmission power control (TPC) (transmitting side), and TPC command determination processing (receiving side) can be spared. In addition, the number of selection combining processings (i.e. the number of channels required per unit time) in RNC can be reduced.

Another mode of embodiment of the present invention employs a configuration of a cellular wireless transmission apparatus that manages a cluster composed of a plurality of cells each consisting of a plurality sectors, and that comprises: an antenna distributed in the sectors; a demodulator that, upon a handover, performs a maximum ratio combining of a received signal from the sectors involved in the handover and obtains a TPC command (transmission power control signal); and a transmitter that performs a downlink transmission power control for all the sectors involved in the handover in accordance with the downlink transmission power control signal common to all the sectors involved in the handover.

This configuration allows a single BTS to perform maximum ratio combining with signals received in respective sectors at remote locations (cells) and demodulate downlink TPC commands. Moreover, each sector in the handover state is able to perform downlink transmission power control using the above identical TPC commands. By virtue of this, the disproportionate likelihood of TPC errors on the downlink between cells in a cluster can be corrected. By this means, the instability in the quality of communication on the downlink can be improved.

Yet another mode of embodiment of the present invention employs a configuration of a cellular wireless transmission apparatus, in which, in addition to the above configuration, a handover between a plurality of cells in a cluster is a softer handover which is the handover within one wireless transmission apparatus.

Yet another mode of embodiment of the present invention employs a configuration of a cellular wireless transmission apparatus, in which, in addition to the above configuration, a handover between the clusters is a diversity handover, which is the handover between wireless transmission apparatuses.

Yet another mode of embodiment of the present invention employs a configuration of a cellular wireless transmission apparatus, in which, in addition to the above configuration, when a sector is involved in a handover and a transmitting sector that a communication partner selects is under the management of the local wireless transmission apparatus, transmission data is sent to the transmitting sector selected by the communication partner, and the same transmission power control signal is sent to the sector and other sectors involved in the handover.

By virtue of these configurations, incomplete transmission that results from failure to receive the signals that select the sectors, from the communication partner can be prevented. Furthermore, decrease in efficiency due to concurrent transmissions from a number of sectors can be prevented. As a result, the advantage of SSDT, and consequently, capacity on the downlink, improve. Furthermore, since only one demodulation circuit is required, the scale of the processing circuit can be reduced.

Yet another mode of embodiment of the present invention employs a configuration of a cellular wireless transmission apparatus, in which, in addition to the above configuration, when a path loss difference between a sector selected by a communication terminal and the other sectors involved in the handover is small, transmission is performed not only from the sector selected by the communication terminal but also from the other sectors having the small path loss difference.

By virtue of this configuration, if the path loss is small, it is possible to prevent transmission from only one sector by SSDT, reduce the transmission power through diversity gain between the cells or sectors, and thus obtain greater interference reduction effects. As a result, it is possible to improve the advantage of SSDT where the path loss is small, and enhance capacity on the downlink.

Yet another mode of embodiment of the present invention employs a configuration of a cellular wireless transmission apparatus which, in addition to the above configuration, further comprises a scheduler that schedules transmission to the sectors involved in the handover in accordance with the channel quality measured at a communication partner side.

This configuration allows a single BTS to perform scheduling and memorization and thus perform centralized control over distributed sectors. This then makes it possible to apply maximum ratio combining to the signals used for HSDPA across remotely distributed cells, and to receive the signals correctly. Consequently, the sector that performs transmission at the next transmission timing can be properly provided with the information of the ID code (i.e., cell selection word), and as a result, the efficiency of transmission by HSDPA improves. Moreover, only one demodulation circuit is required, so that the scale of the processing circuit is reduced. Furthermore, not every cell needs to have a large memory for high-speed packets, and this can reduce the required memory volume per area (e.g., per cluster) .

Yet another mode of embodiment of the present invention employs a configuration of a cellular wireless transmission apparatus in which, in addition to the above configuration, a routing control using an IP address is performed for every cluster, and in which transmission in a wireless interval to an end terminal accords with the selection of a transmitting antenna in the sectors distributed in one cluster.

This configuration simplifies routing control and spares an enormous amount of registration processing. Where the mobile IP is applied, there is no need to implement the cellular IP, leaving a possibility that the mobile IP alone suffices to implement IP transmission. As for transmission to the end terminal (i.e. transmission between wireless intervals), it accords with the selection of transmitting sectors in the distributed sectors under one apparatus, thereby making inter-cell handover, which requires multi-cast and synchronization of the timings of transmission by wireless, more readily implementable.

Yet another mode of embodiment of the present invention is a cellular wireless transmission method for managing a cluster composed of a plurality of cells each consisting of a plurality sectors, that comprises: performing, upon a handover, a maximum ratio combining of a signal received from the sectors involved in the handover and obtaining demodulated data; generating an uplink transmission power control signal in accordance with a received quality of the received signal after the maximum ratio combining or the quality of the demodulated data; and transmitting transmission data and the same uplink transmission power control signal to all the sectors involved in the handover.

This method allows a single apparatus (BTS) to process signals received in the antennas distributed in respective sectors. Accordingly, demodulation processing, received SIR measurement, and uplink TPC command determination do not have to be performed in under every BTS provided in each cell as in conventional ways. By virtue of this, even in inter-cell handover, since the uplink TPC commands transmitted from the respective cells do not vary, the communication terminal does not needperform such control as to increases the transmission power only when all the commands from the cells or sectors in the handover state command on "UP."

Thus it is possible to reduce the load of handover processing on Iub (i.e., information transmission and channel set up with new BTS on Iub). Moreover, mutual decoding processing between BTS and MS, SIR measurement, the generation of TPC commands for transmission power control (TPC) (transmitting side), and TPC command determination processing (receiving side) can be spared. In addition, the number of selection combining processings (i.e., the number of channels required per unit time) in RNC can be reduced.

Yet another mode of embodiment of the present invention is a cellular wireless transmission method for managing a cluster composed of a plurality of cells each consisting of a plurality sectors, that comprises: performing, upon a handover, a maximum ratio combining of a received signal from the sectors involved in the handover and obtaining a downlink transmission power control signal; and performing a downlink transmission power control for all the sectors involved in the handover in accordance with the downlink transmission power control signal common to said all the sectors involved in the handover.

This allows a single BTS to perform maximum ratio combining with signals received in respective sectors at remote locations (cells) and demodulate downlink TPC commands. Moreover, each sector in the handover state is capable of performing downlink transmission power control using the above identical TPC commands. By virtue of this, the disproportionate likelihood of TPC errors on the downlink between cells in a cluster can be corrected. By this means, the instability in the quality of communication on the downlink can be improved.

In yet another mode of the above method, when a sector is involved in the handover and a transmitting sector that a communication partner selects is under the management of a local wireless transmission apparatus, transmission data is sent to the transmitting sector selected by the communication partner, and the same transmission power control signal is sent to said sector and other sectors involved in the handover.

This method can prevent incomplete transmission that results from failure to receive the signals that select the sectors from the communication partner. As a result, the advantage of SSDT, and consequently, capacity on the downlink, improve.

In yet another mode of the above method, when a path loss difference between a sector selected by a communication terminal and the other sectors involved in the handover is small, transmission is performed not only from the sector selected by the communication terminal but also from the other sectors having the small path loss difference.

This method, when the path loss is small, can prevent transmission from only one sector by SSDT, reduce the transmission power through diversity gain between the cells or sectors, and achieve greater interference reduction effects. As a result, the advantage of SSDT effects improves where the path loss is small, and capacity on the downlink improves.

Yet another mode of the above method further comprises scheduling with respect to the sectors involved in the handover in accordance with a result of a channel quality measured at a communication partner side.

This method allows a single BTS to perform scheduling and memorization and thus perform centralized control over distributed sectors. This then makes it possible to apply maximum ratio combining to the signals used for HSDPA across remotely distributed cells, and to receive the signals correctly. Consequently, the sector that performs transmission at the next transmission timing can be properly provided with the information of the ID code (i.e., cell selection word), and as a result, the efficiency of transmission by HSDPA improves.

In yet another mode of the above method, a routing control using an IP address is performed for every cluster, and wherein transmission in a wireless interval to an end terminal accords with a selection of a transmitting antenna in the sectors distributed in one cluster.

This method can simplify routing control, spare an enormous amount of registration processing, and, where the mobile IP is applied, there is no need to implement the cellular IP, leaving a possibility that the mobile IP alone suffices to implement IP transmission. As for transmission to the end terminal (i.e. transmission between wireless intervals), it accords with the selection of transmitting sectors by the sectors distributed under one apparatus, thereby making inter-cell handover, which requires multi-cast and synchronization of the timings of transmission by wireless, more readily implementable.

The present specification is based on Japanese Patent Application No. 2001-170822 filed on June 6, 2001, entire content of which is expressly incorporated herein for reference.

Industrial Applicability

The present invention suits for use with cellular wireless transmission apparatus and cellular wireless transmission methods for use with digital wireless communication schemes.

**Claims**

1. A cellular wireless transmission apparatus that manages a cluster composed of a plurality of cells each consisting of a plurality sectors, comprising:

   an antenna distributed in the sectors;
   a demodulator that, upon a handover, performs a maximum ratio combining of a signal received from the sectors involved in the handover and obtains demodulated data;
   a transmission power control signal generator that generates an uplink transmission power control signal in accordance with a received quality of the received signal after the maximum ratio combining or a received quality of the demodulated data; and
   a transmitter that transmits transmission data and the same uplink transmission power control signal to all the sectors involved in the handover.

2. A cellular wireless transmission apparatus that manages a cluster composed of a plurality of cells each consisting of a plurality sectors, comprising:

   an antenna distributed in the sectors;
   a demodulator that, upon a handover, performs a maximum ratio combining of a received signal from the sectors involved in the handover and obtains a downlink transmission power control signal; and
   a transmitter that performs a downlink transmission power control for all the sectors involved in the handover in accordance with the downlink transmission power control signal common to said all the sectors involved in the handover.

3. The cellular wireless transmission apparatus according to claim 1, wherein the handover between the plurality of cells in the cluster is a softer handover which is the handover within one wireless transmission apparatus.

4. The cellular wireless transmission apparatus according to claim 2, wherein the handover between the plurality of cells in the cluster is a softer handover, which is the handover within one wireless transmission apparatus.

5. The cellular wireless transmission apparatus according to claim 1, wherein the handover between the clusters is a diversity handover, which is the handover between wireless transmission apparatuses.

6. The cellular wireless transmission apparatus according to claim 2, wherein the handover between the clusters is a diversity handover, which is the handover between wireless transmission apparatuses.

7. The cellular wireless transmission apparatus according to claim 1, wherein, when a sector is involved in the handover and a transmitting sector that a communication partner selects is under the management of said wireless transmission apparatus, transmission data is sent to the transmitting sector selected by the communication partner, and the same transmission power control signal is sent to said sector and other sectors involved in the handover.

8. The cellular wireless transmission apparatus according to claim 2, wherein, when a sector is involved in the handover and a transmitting sector that a communication partner selects is under the management of said wireless transmission apparatus, transmission data is sent to the transmitting sector selected by the communication partner, and the same transmission power control signal is sent to said sector and other sectors involved in the handover.

9. The cellular wireless transmission apparatus according to claim 7, wherein, when a path loss difference between a sector selected by a communication terminal and the other sectors involved in the handover is small, transmission is performed not only from the sector selected by the communication terminal but also from the other sectors having the small path loss difference.

10. The cellular wireless transmission apparatus according to claim 8, wherein, when a path loss difference between a sector selected by a communication terminal and the other sectors involved in the handover is small, transmission is performed not only from the sector selected by the communication terminal but also from the other sectors having the small path loss difference.

11. The cellular wireless transmission apparatus according to claim 1, further comprising a scheduler that schedules transmission to the sectors involved in the handover in accordance with a result of a channel quality measured at a communication partner side.

12. The cellular wireless transmission apparatus according to claim 2, further comprising a scheduler that schedules transmission to the sectors involved in the handover in accordance with a result of a channel quality measured at a communication partner side.

13. The cellular wireless transmission apparatus according to claim 1, wherein a routing control using an IP address is performed for every cluster, and wherein transmission in a wireless interval to an end terminal accords with a selection of a transmitting antenna in the sectors distributed in one cluster.

14. The cellular wireless transmission apparatus according to claim 2, wherein a routing control using an IP address is performed for every cluster, and wherein transmission in a wireless interval to an end terminal accords with a selection of a transmitting antenna in the sectors distributed in one cluster.

15. A cellular wireless transmission method for managing a cluster composed of a plurality of cells each consisting of a plurality sectors, comprising:

    performing, upon a handover, a maximum ratio combining of a signal received from the sectors involved in the handover and obtaining demodulated data;
    generating an uplink transmission power control signal in accordance with a received quality of the received signal after the maximum ratio combining or a received quality of the demodulated data; and,
    transmitting transmission data and the same uplink transmission power control signal to all the sectors involved in the handover.

16. A cellular wireless transmission method for managing a cluster composed of a plurality of cells each consisting of a plurality sectors, comprising:

    performing, upon a handover, a maximum ratio combining of a received signal from the sectors involved in the handover and obtaining a downlink transmission power control signal; and
    performing a downlink transmission power control for all the sectors involved in the handover in accordance with the downlink transmission power control signal common to said all the sectors involved in the handover.

17. The cellular wireless transmission method according to claim 15, wherein, when a sector is involved in the handover and a transmitting sector that a communication partner selects is under the management of a local wireless transmission apparatus, transmission data is sent to the transmitting sector selected by the communication partner, and the same transmission power control signal is sent to said sector and other sectors involved in the handover.

18. The cellular wireless transmission method according to claim 16, wherein, when a sector is involved in the handover and a transmitting sector that a communication partner selects is under the management of a wireless transmission apparatus, transmission data is sent to the transmitting sector selected by the communication partner, and the same transmission power control signal is sent to said sector and other sectors involved in the handover.

19. The cellular wire less transmission method according to claim 17, wherein, when a path loss difference between a sector selected by a communication terminal and the other sectors involved in the handover is small, transmission is performed not only from the sector selected by the communication terminal but also from the other sectors having the small path loss difference.

20. The cellular wireless transmission method according to claim 18, wherein, when a path loss difference between a sector selected by a communication terminal and the other sectors involved in the handover is small, transmission is performed not only from the sector selected by the communication terminal but also from the other sectors having the small path loss difference.

21. The cellular wireless transmission method according to claim 15, further comprising scheduling with respect to the sectors involved in the handover in accordance with a result of a channel quality measured at a communication partner side.

22. The cellular wireless transmission method according to claim 16, further comprising scheduling with respect to the sectors involved in the handover in accordance with a result of a channel quality measured at a communication partner side.

23. The cellular wireless transmissionmethod according to claim 15, wherein a routing control using an IP address is performed for every cluster, and wherein transmission in a wireless interval to an end terminal accords with a selection of a transmitting antenna in the sectors distributed in one cluster.

24. The cellular wireless transmission method according to claim 16, wherein a routing control using an IP address is performed for every cluster, and wherein transmission in a wireless interval to an end terminal accords with a selection of a transmitting antenna in the sectors distributed in one cluster.

FIG. 1

EP 1 395 075 A1

FIG. 2

FIG. 3

Iub

103 — BTS

101-1
102-1
RADIO SECTION
SECTOR 1

101-2
RADIO SECTION
SECTOR 2

107
102-2

101-N
102-N
RADIO SECTION
SECTOR N

1031
DEMODULATOR

1032
SIR MEASURER

1033

1034
TPC COMMAND DETERMINER

1035
MULTIPLEXER

1036
MODULATOR

RNC

RECEIVED DATA

104
ERROR DETECTOR

105
TARGET ERROR RATE

106
TARGET SIR CONTROLLER

TRANSMISSION DATA

HO INFORMATION

EP 1 395 075 A1

FIG. 4A

FIG. 4B

FIG. 5

FIG. 6

FIG. 7

EP 1 395 075 A1

FIG. 8

FIG. 9

EP 1 395 075 A1

FIG. 10

Iub

BTS

RNC

601 DATA SIGNAL DEMODULATOR

101-1

102-1 RADIO SECTION

SECTOR 1

101-2

RADIO SECTION

102-2 SECTOR 2

107

602 CONTROL SIGNAL DEMODULATOR

TFCI

1032 SIR MEASURER

1033

1034 TPC COMMAND DETERMINER

801 SCHEDULER

MODULATION LEVEL

1036 MODULATOR

1035 MULTI-PLEXER

802 MEMORY

101-N 102-N RADIO SECTION

SECTOR N

RECEIVED DATA

104 ERROR DETECTOR

TARGET ERROR RATE

106 TARGET ERROR RATE

TRANSMISSION DATA

HO INFORMATION

EP 1 395 075 A1

FIG. 11

EP 1 395 075 A1

# EP 1 395 075 A1

## INTERNATIONAL SEARCH REPORT

International application No.

PCT/JP02/05524

### A. CLASSIFICATION OF SUBJECT MATTER
$Int.Cl^7$ H04Q7/38

According to International Patent Classification (IPC) or to both national classification and IPC

### B. FIELDS SEARCHED

Minimum documentation searched (classification system followed by classification symbols)
$Int.Cl^7$ H04Q7/00-7/38, H04B7/24-7/26

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 9-312885 A (NTT Mobile Communications Network Inc.),<br>02 December, 1997 (02.12.97),<br>Par. No. [0006]<br>& EP 0797369 A2     & CA 2200518 A<br>& US 6011787 A     & CN 1165459 A | 1-24 |
| Y | JP 11-69416 A (NEC Corp.),<br>09 March, 1999 (09.03.99),<br>Par. No. [0003]<br>& EP 0884918 A2     & US 6141555 A | 1-24 |
| Y | JP 2000-102052 A (NEC Corp.),<br>07 April, 2000 (07.04.00),<br>& EP 0987833 A2     & CN 1249653 A<br>& US 6285887 A | 1-24 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 September, 2002 (10.09.02) | 08 October, 2002 (08.10.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

31

## INTERNATIONAL SEARCH REPORT

| International application No. |
|---|
| PCT/JP02/05524 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 9-312609 A  (NTT Mobile Communications Network Inc.), 02 December, 1997 (02.12.97), (Family: none) | 1-24 |

Form PCT/ISA/210 (continuation of second sheet) (July 1998)